Europäisches Patentamt

European Patent Office

Office européen des brevets

(11) Publication number: **0 398 765 B1**

## EUROPEAN PATENT SPECIFICATION

(45) Date of publication of patent specification: **10.05.95**  (51) Int. Cl.6: **B01D 53/66**, C02F 1/70

(21) Application number: **90305507.7**

(22) Date of filing: **21.05.90**

(54) **Ozone decomposition.**

(30) Priority: **19.05.89 JP 127528/89**
**12.12.89 JP 322374/89**
**06.06.89 JP 143380/89**

(43) Date of publication of application:
**22.11.90 Bulletin 90/47**

(45) Publication of the grant of the patent:
**10.05.95 Bulletin 95/19**

(84) Designated Contracting States:
**DE FR GB IT NL**

(56) References cited:
**EP-A- 0 186 477    BE-A- 881 318**
**DE-A- 1 419 682    DE-A- 2 415 452**
**DE-A- 3 636 250    DE-U- 8 518 123**
**FR-A- 2 357 297**

(73) Proprietor: **SAKAI CHEMICAL INDUSTRY CO.,**
**LTD.,**
**1, Ebisujimacho 5-cho**
**Sakai**
**Osaka (JP)**

(72) Inventor: **Yoshimoto, Masafumi**
**1, Ebisujimacho 5-chome**
**Sakai,**
**Osaka (JP)**
Inventor: **Nakatsuji, Tadao**
**1, Ebisujimacho 5-chome**
**Sakai,**
**Osaka (JP)**
Inventor: **Nagano, Kazuhiko**
**1, Ebisujimacho 5-chome**
**Sakai,**
**Osaka (JP)**
Inventor: **Tatsu, Tetsuo**
**1, Ebisujimacho 5-chome**
**Sakai,**
**Osaka (JP)**

(74) Representative: **Geering, Keith Edwin et al**
**REDDIE & GROSE**
**16 Theobalds Road**
**London WC1X 8PL (GB)**

Rank Xerox (UK) Business Services
(3.10/3.09/3.3.3)

**Description**

This invention relates to ozone decomposition. Proposed methods of decomposing noxious ozone contained in the air include adsorption wherein porous material is used such as activated carbon or zeolite, and oxidative decomposition wherein a catalyst is used such as $MnO_2$. These methods are not satisfactory. Adsorption has the disadvantage that the adsorbent must be regenerated frequently since it is limited in adsorption ability, so that operation is laborious and costly. Known oxidative decomposition catalysts have insufficient activity and deteriorate very rapidly under severe conditions - for example, at high ozone concentration or at high space velocity. FR-A-2357297 discloses elimination of ozone from gas mixtures by contact with granular metal oxide catalyst at elevated reaction temperature. EP-A-0186477 discloses air conditioning heat exchangers having ozone decomposition catalyst on the surface of a warm air inlet. DE-A-2415452 and DE-U-G8518123.4 are not concerned with ozone decomposition; the former discloses a catalyst having a coating of catalytic material on a metal substrate which is in the form of a metal strip having plain and corrugated lengths rolled up to provide through-passages for the reactants and products, electric current being passed through the metal strip to heat the catalyst; the latter discloses a filter/catalyst for gases and fluids having a non-metallic synthetic substrate in the form of an open-cell foam or a planar lattice (or a plurality of superposed planar lattices) with the foam cells or lattice apertures providing through-passages for gas/fluid and having a catalytic metal coating, Fig.8 showing a generalised such filter/catalyst between electrodes for electrifying the filter/catalyst to heat it. DE-A-3636250 also does not mention ozone decomposition; it discloses removing gaseous impurities from waste or exhaust gas by oxidation in an oxygen-containing flow over a heated metal, metal oxide or ceramic catalyst, the catalyst being periodically regenerated in an oxygen-containing flow at an elevated but lower temperature.

The invention provides an improved ozone decomposition process and reactor element, a method for decomposing ozone and a method of regenerating such a reactor element.

Herein the term "catalyst" means active components which have ozone decomposition activity. The catalyst is usually supported on a substrate to form a catalyst structure, or is molded into a mold structure together with other molding components, for practical use. These structures will be referred to as catalyst structures.

In accordance with the invention, there is provided an ozone decomposition reactor element which comprises

(a) an ozone decomposition catalyst structure comprising a substrate which is selected from [i] a ceramic honeycomb mold having at least one passage extending therethrough for allowing fluid to pass therethrough and [ii] fibrous boards arranged to provide at least one passage therebetween for allowing fluid to pass therealong, the substrate carrying or incorporating ozone decomposition catalyst in an amount effective to render the substrate active for ozone decomposition and electroconductive material in the form of powder, fiber or whisker so that the catalyst structure can be heated by electrification; and
(b) electrodes attached to the catalyst structure for electrifying the structure to decompose ozone at elevated temperature.

The catalyst structure may comprise a preformed substrate to which catalyst and electroconductive material are applied; or a body formed from a mixture of substrate material and electroconductive material (or catalyst) to which catalyst (or electroconductive material) is subsequently applied; or a body formed from a mixture of substrate and electroconductive materials and catalyst.

Any known ozone decomposition catalyst may be used. It may be selected for example, from $MnO_2$, $MoO_3$, $CuO$, $Fe_2O_3$, $Ag_2O$, $NiO$, $Co_3O_4$, $WO_3$, $V_2O_5$, $SnO_2$, Pt and Pd. These catalysts may be used singly or as a mixture of two or more.

There may be used as a catalyst, for example, a binary catalyst such as $MnO_2/TiO_2$, $MnO_2$/alkali metal oxide or $MnO_2$/alkaline earth metal oxide, or a zeolite catalyst composed of a zeolite having a metal oxide whose oxide formation enthalpy - $\Delta H^0 f$ is not more than 100 kcal (418.7 kJ)/g-atom of oxygen.

The electroconductive material used in the invention may be any material of electrical resistance which generates heat when electrified. Thus, there may be used as such an electroconductive material , for example, graphite, carbon fibers, silicon carbide, silver, nickel-chromium alloy, chromium-aluminum alloy or stainles steel. The carried electroconductive materials may be in the form powder, whisker or fiber.

The catalyst is usually supported on an inactive substrate such as a ceramic carrier material, together with electroconductive material to form a catalyst structure suitable for practical use. By way of example, catalyst powder and electroconductive material are formed into an aqueous plastic or moldable mixture, together with ceramic powder such as alumina, silica, alumina-silica, titanium dioxide, zirconium dioxide or clay, and organic binder such as methyl cellulose, polyvinyl alcohol, polyvinyl chloride or polyethylene oxide. Then the mixture is extrusion-molded into a honeycomb, dried, and if desired sintered, to provide a catalyst structure having a plurality of passages extending therethrough for allowing an ozone containing fluid to pass through the structure.

The catalyst structure contains the catalyst in an amount preferably of 30-70 % by weight; an amount of more than 70 % by weight gives no special advantage and is rather uneconomical; when the amount is less than 30% by weight, the ozone decomposition activity may be low.

The catalyst structure contains the electroconductive material also in an amount preferably of 30-70 % by weight; when the amount is more than 70 % by weight, contact of the, catalyst with ozone may be hindered, decreasing the decomposition activity, and it may be difficult to produce a catalyst structure of such high content of electroconductive material since the mixture may be poor in moldability; when the amount is less than 30 % by weight, the catalyst structure may remain substantially electrically insulative so that it is not heated to the elevated temperature desired to effectively decompose ozone.

The invention is illustrated, by way of example, by the following description of embodiments to be taken in conjunction with the accompanying drawings, in which:

FIGURE 1 is a perspective illustration of an ozone decomposition reactor element of the invention;

FIGURE 2 is an enlarged plan view of part of an ozone decomposition reactor element of the invention;

FIGURE 3 is a perspective illustration of an ozone decomposition reactor of the invention; and

FIGS.4 and 5 are perspective views of catalyst structures used in the invention.

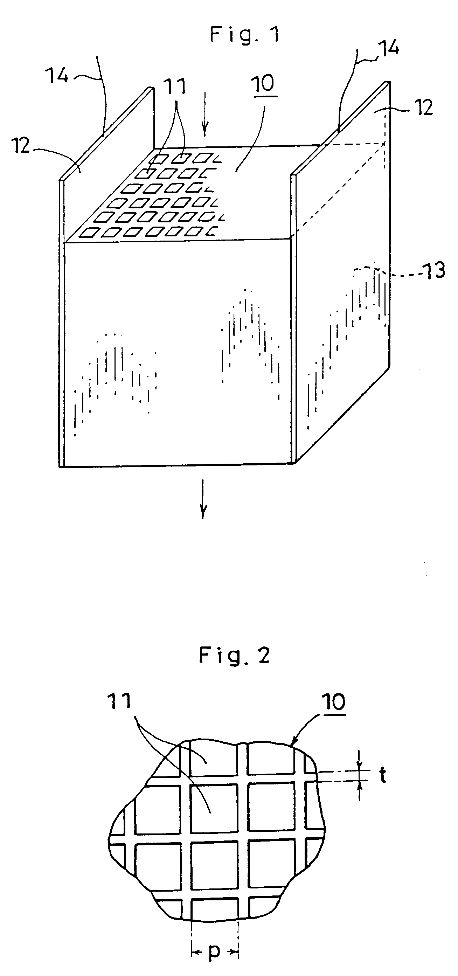

Fig.1 illustrates a reactor element with a honeycomb catalyst structure 10 which has a number of passages 11 square in section extending through the structure. The reactor element of the invention has a pair of electrodes 12 in contact with the side walls 13 and electroconductive lead wires 14 connected to the electrodes, so that the honeycomb structure can be electrified. The electrodes may be of copper or stainless steel plate of a thickness of about 0.1-0.2 mm. However, the electrodes may be in the form of disk, tube or wire of other materials including aluminium or carbonaceous material, if desired.

Fig.2 shows an enlarged part plan view of the passages 11 of the catalyst structure 10. It is preferred that the honeycomb structure has walls of a thickness t of about 0.1-1.0 mm and a pitch p of about 1.0-7.0 mm. However, the passages are not specifically limited in section, and may be not only square as illustrated, but also circular, triangular or hexagonal.

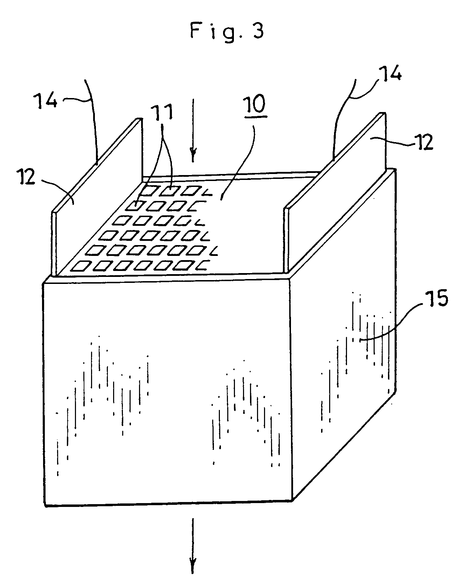

In use in a reactor, the catalyst structure 10 is fitted in an insulating casing 15, as illustrated in Fig. 3, and an ozone containing fluid is passed through the passages 11, as indicated by arrows.

In one method, an electroconductive honeycomb carrier mold of ceramic material such as of titanium dioxide which contains an electroconductive material may be first produced, and then the catalyst may be supported on the honeycomb carrier, as described hereinafter. In another method, a ceramic carrier mold is first prepared, and then electroconductive materal and catalyst may be supported thereon.

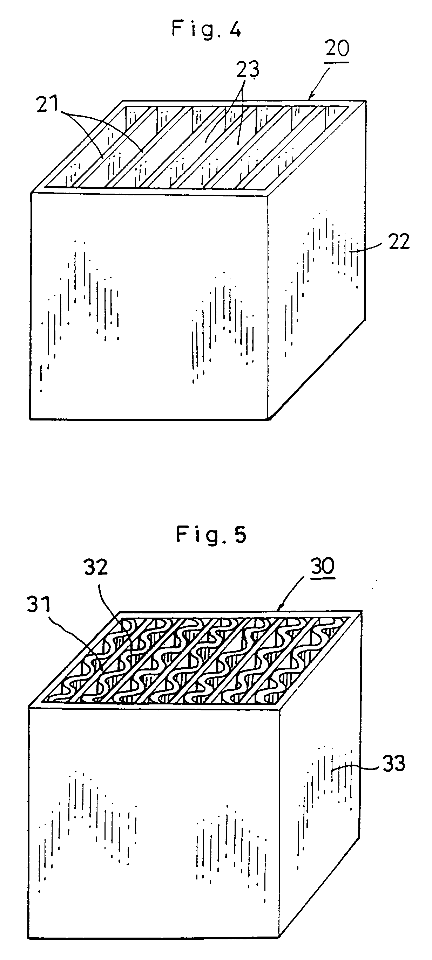

The honeycomb structure in a wide sense may be of fibrous boards arranged so that passages are formed therebetween. Fig. 4 illustrates an embodiment of a honeycomb structure 20 made of a plurality of fibrous boards 21 disposed parallel to each other at a distance in an insulating casing 22. Passages 23 are shown which have a rectangular section and extend between the boards. Fig. 5 is an illustration of a further embodiment of a honeycomb structure 30 made of a plurality of flat fibrous boards 31 and corrugated fibrous boards 32 disposed alternately and glued to each other in an insulating casing 33. Passages are formed between the flat and corrugated boards so that they extend along the boards. A pair of electrodes (not shown) may be connected to the boards at the opposite ends thereof to provide a reactor of the invention.

The production of fiber boards for use in the invention will now be described. There may be used as fiber materials, for instance, inorganic fibers such as ceramic fibers, glass fibers, carbon fibers, alumina fibers or silica-alumina fibers, or organic fibers such as rayon fibers or cellulose fibers. These organic fibers are preferably used in conjunction with inorganic fibers in the invention because of their high dispersibility in water. However, such organic fibers as polyvinyl alcohol fibers, acrylic fibers, polyester fibers, polyacrylonitrile fibers or polyamide fibers may also be used. The fibers may be used singly or as a mixture of two or more.

In the production of the fiber boards, an organic binder is preferably used to improve dispersibility of the fibres in water as well as mechanical strength of the resultant wet sheet by glueing the fibers together. Suitable organic binders include, for example, polyvinyl alcohol, acrylic resin, vinyl acetate resin, polyethylene, urea resin, melamine resin, carboxymethyl cellulose or starch, among which is in particular preferred polyvinyl alcohol. The organic binder is usually used in the form of aqueous solution or emulsion, but it may be used in the form of powder or fibers.

The fibers are formed into an aqueous slurry or a stock together with electroconductive material and organic binder. The stock usually has a solid concentration of about 0.1-3 % by weight. The stock is then formed into a wet web of fibers, and the web is dehydrated and dried by means of a conventional paper making machine such as a Fourdrinier machine or cylinder machine, to provide a web of fibers or fiber board. The thus produced fiber board has a thickness preferably of about 0.15-0.50 mm and a density of about 0.2-0.4 $g/cm^3$. The fiber board may then be corrugated, if necessary.

In general, the catalyst structure used to treat a fluid that contains a high concentration of ozone preferably contains heat resistant fibers, and such a structure is preferably mainly composed of inorganic fibers. By way of example, a stock may contain 80-96 % by weight of inorganic fibers, 2-10 % by weight of organic fibers and 2-10 % by weight of organic binder based on the total of these materials. However, it is preferred that the amount of the organic materials is not more than 15 % by weight. The greater the amount of the organic materials, the easier the production and processing of the fiber board, but the lower the mechanical strength of the board.

It is preferred that the fiber board contains an electroconductive material in an amount of about 30-50 % by weight; when the amount is less than about 30 % by weight, the board may remain substantially insulative so that it is not heated adequately when electrified, whereas it can be difficult to produce a fiber board which contains electroconductive material in an amount of more than 50 % by weight by means of a conventional paper making process. It is further preferred that the fiber board has a micropore volume of not less than 0.2 $cm^3$/g so that a sufficient amount of the catalyst is supported thereon in a manner which will be hereinafter described.

However, when fibers only are formed into a board by the conventional paper making process, and then an electroconductive material is supported thereon, more than 50 % by weight of the electroconductive material may be supported on the fiber board.

The catalyst structure is then formed by supporting the catalyst on the thus produced electroconductive fiber board by, for example, an immersion or a wash coat method.

According to one immersion method, the fiber board is immersed in a solution of precursor of the catalyst to impregnate the board with the solution, and is then dried and calcined to convert the precursor into the catalyst. The precursor may be a water soluble compound, for example, manganese acetate, which is converted into manganese oxides by being heated. The catalyst is supported in an amount (e.g. not less than 5 % by weight) such that the resultant catalyst structure has sufficient ozone decomposition activity. Usually the amount of the catalyst is not more than 30 % by weight since it may be difficult to support more catalyst by the immersion method.

In a wash coat method, the fiber board can be immersed in a slurry of the the catalyst and then dried to provide a catalyst structure. By way of example, when the fiber board has micropores of 300-400 Å in diameter and a micropore volume of 0.26-0.29 ml/g, it is preferred that the catalyst is supported in an amount of 0.05-0.5 g per unit volume of the fiber board. It is further preferred that the fiber board has a layer of the catalyst of a thickness of 10-200 $\mu$m. When the thickness is less than 10 $\mu$m, the catalyst structure may have insufficient activity per unit volume; when the thickness is more than 200 $\mu$m, the ozone decomposition activity may not improve correspondingly. Disadvantages may arise as follows when the thickness is more than 200 $\mu$m. First, a large pressure loss may arise when ozone containing fluid is passed through the passages of the honeycomb structure, so that a large power input and cost are necessary. Secondly, in particular in the case of a carrier in the form of a honeycomb mold, the catalyst may cover the surfaces of the passages unevenly so that the passages are irregular in section and the fluid is prevented from effective diffusion into the catalyst layer; this leads to reduced ozone decomposition activity per unit volume of the catalyst structure. Thirdly, catalyst material may separate from the carrier and undesired environmental polution may occur.

When the immersion or wash coat method is employed to support the catalyst on a carrier material, a fiber material may also be applied. Any fibers may be used provided that they are resistant to ozone and are readily supported on the carrier. The fibers may have a large length/diameter ratio such as mullite ceramic fibers, C or E glass fibers or stainless fibers, or a small length/diameter ratio such as potassium titanate fibers or silicon carbide whiskers. However, from the standpoint of easiness of supporting, and useful synergistic effect of catalytic decomposition and mechanical decomposition of ozone with fibers, the fibers used preferably have a length of 0.1-20 $\mu$m and a length/diameter ratio of 10-1000 when supported on a carrier. The fibers are preferably present in an amount of 2-20 % by weight based on the materials supported on the carrier. When the amount of the fibers is more than 20 % by weight, they may be unevenly supported and prevent effective decomposition of ozone with the catalyst.

In operating the reactor, the catalyst structure is electrified so that it is heated to elevated temperature while a fluid which contains ozone therein is passed through the passages to contact the catalyst so that ozone is catalytically decomposed.

The ozone decomposition may be carried out at a temperature of e.g.not less than 20°C , preferably at a temperature of about 30-90°C. When the reaction temperature is less than about 20°C , high valency oxides produced by the reaction of ozone and the catalyst may not be decomposed and oxygen may accumulate in the catalyst structure, to reduce ozone decomposition rate.

The reaction temperature at which no such reduction of reaction rate takes place depends upon the catalyst used and the amount of ozone put into contact with unit amount of the catalyst per unit time. In this regard, it is useful to determine the reaction temperature based on a CA value. The CA value is herein defined as the product of ozone concentration (ppm) at an inlet of a reactor and area velocity of waste gas introduced into the reactor, and the area velocity is defined as the value of space velocity ($h^{-1}$) of the gas divided by gas contact area per unit volume ($m^2/m^3$) of catalyst structure. For example when a waste gas is treated at a CA value of 100000 with a catalyst of $MnO_2$, the reaction is carried out at 60°C . When a binary catalyst of $MnO_2$ (80 % by weight)/$Ag_2O$ (20 % by weight) is used, the reaction is carried out at 55°C. When a ternary catalyst of $MnO_2$ (70 % by weight)/$Ag_2O$ (10 % by weight)/$TiO_2$ (20 % by weight) is used, the reaction is carried out at 40°C . In turn, when a waste gas is treated at a CA value of 1000 with the catalysts as above, the reaction may be carried out at temperatures of 55°C , 50°C and 35°C , respectively.

As set forth above, the reactor element of the invention contains electroconductive material and is electrified and ozone is put into contact with the catalyst at elevated temperatures. Therefore, ozone can be decomposed at a high rate while the catalyst retains its high activity over a long period of time even under severe reaction conditions.

As a further aspect of the invention, there is provided a method of regenerating the ozone decomposing catalyst structure or reactor element as hereinbefore described, which comprises electrifying and heating the catalyst structure to elevated temperature to regenerate the catalyst.

The catalyst structure is preferably used at a temperature of not less than about 20°C , as hereinbefore set out. However, it is still often found that the ozone decomposition rate reduces with time when the ozone decomposition reaction is carried out at about 20°C. It may be necessary for some reason that the reaction be carried out at lower temperatures, where the more severe the reaction conditions, the more rapidly the decomposition rate reduces.

However, in accordance with the invention, the deactivated catalyst structure is regenerated by electrifying and heating at temperatures preferably of not less than about 40°C, more preferably of not less than about 50°C, and most preferably of not less than about 70°C. The higher the temperature at which the catalyst structure is regenerated, the higher the ozone decomposition rate attained, so that decomposition can be carried out over a longer period before the catalyst structure is deactivated to a predetermined level of activity.

The invention will now be described in more detail in the following Examples, but it is not limited thereto.

Example 1

An amount of 2 Kg of a ternary catalyst of $MnO_2$ (70 % by weight)/$Ag_2O$ (10 % by weight)/$TiO_2$ (20 % by weight) having a specific surface area of 32 $m^2/g$ and an average particle size of 30 $\mu$m, 600 g of graphite powder, 60 g of methyl cellulose and water were admixed together.

The mixture was extruded into a honeycomb mold with a pitch of 1.3 mm and a wall thickness of 0.2 mm. The green mold was air-dried at 100°C over 18 hours, and was then calcined at 450°C over 3 hours. The honeycomb mold was cut into a catalyst structure of a size of 30 mm x 30 mm x 20 mm (axial length) and a pair of copper electrodes were fitted to opposite walls to form a reactor element. The catalyst structure was found to have a resistance of 314Ω.

The reactor element was put into a casing to provide a reactor.

The activity of the reactor was measured as follows. Air was introduced into an ozone generator so that the air contained ozone in a predetermined concentration, and then the air was passed through the reactor while the catalyst structure was electrified. The ozone concentrations in the air at the inlet and the outlet of the reactor were analyzed with an ozone analyzer. Ozone decomposition rate (%) was calculated based on an expression: $[(C_1-C_2)/C_1] \times 100$, wherein $C_1$ is ozone concentration at the inlet and $C_2$ is ozone concentration at the outlet. The results are shown in Table 1.

As apparent from Table 1, the higher the temperature of the catalyst structure, the higher the ozone decomposition rate and the more durable the catalyst structure.

TABLE 1

| Catalyst Structure | Temperature (°C) Gas at Outlet of Reactor | Ozone Concentration at Inlet of Reactor (ppm) | CA Value | Ozone Decompositon Rate (%) | | |
|---|---|---|---|---|---|---|
| | | | | Initial | After 100 h | After 1000 h |
| 20 | 20 | 1000 | 10000 | 78.9 | 28.7 | 6.0 |
| 30 | 20 | 1000 | 10000 | 84.4 | 67.4 | 40.9 |
| 40 | 21 | 1000 | 10000 | 93.1 | 85.9 | 41.6 |
| 50 | 25 | 1000 | 10000 | 94.9 | 94.9 | 95.1 |

Example 2

An amount of 2 Kg of anatase titanium dioxide of a specific surface area of 58 m$^2$/g and an average particle size of 17 $\mu$m, 600 g of graphite powder, 60 g of methyl cellulose and water were admixed together.

The mixture was extruded into a honeycomb mold with a pitch of 1.3 mm and a wall thickness of 0.2 mm. The green mold was air-dried at 100°C over 18 hours, and was then calcined at 450°C over 3 hours. The resultant electroconductive carrier honeycomb was found to have a micropore volume of 0.33 ml/g and an average micropore diameter of 185 Å.

An amount of 100 g of a ternary catalyst of $MnO_2$ (70 % by weight)/$Ag_2O$ (10 % by weight)/$TiO_2$ (20 % by weight) of a specific surface area of 32 $m^2$/g and an average particle size of 30 $\mu$m, 80 ml of silica gel and 150 ml of alumina beads were mixed together, and the mixture was wet-milled over 30 minutes, to provide a slurry.

The carrier honeycomb was immersed in the slurry. After an excess of the slurry was removed by air blowing, the honeycomb was dried at 50°C over 18 hours, to provide a honeycomb catalyst structure. The catalyst structure was found to have catalyst in an amount of 0.21 g per ml of the catalyst structure and a catalyst layer of a thickness of 63 $\mu$m as an average of 50 points measurement.

### Example 3

A honeycomb carrier was prepared in the same manner as in Example 2, and was immersed in an aqueous solution of manganese acetate (300 g/l in terms of $MnO_2$). After excess of the solution was removed by air blowing, the honeycomb was air-dried at 80°C , dried at 100°C over 18 hours, and then calcined at 450°C over 3 hours, to provide a honeycomb catalyst structure.

The catalyst structure was found to have a $MnO_2$ content of 9.1 % by weight. It was further found that nearly all of the catalyst was present in layer up to a depth of 60 $\mu$m from the surface.

### Example 4

An amount of 70 parts by weight of alumina-silica fibers having a diameter of 2.6-3.0 $\mu$m and a length of 5-30 mm, 5 parts by weight of 1.5 d rayon fibers having a length of 5 mm, 35 parts by weight of carbon fibers and 5 parts by weight of polyvinyl alcohol fibers as a binder were mixed together. The mixture was dispersed in water in an amount of 340 times the weight of the mixture to form a stock. The stock was made into a web sheet by means of a conventional cylinder paper making machine, and the web sheet was formed into a corrugated board of a corrugation height of 2.2 mm.

A mixture of 8.0 parts by weight of ethyl silicate of a solid content of 40 % by weight 13 parts by weight of ethyl alcohol, 6 parts by weight of water and 1 part by weight of 5 % hydrochloric acid was sprayed at a rate of 100 g in terms of $SiO_2$ per 100 g of the board. The board was dried in a wet atmosphere for 3 hours, and then calcined at 450°C in an oxidative atmosphere, to provide a carrier structure in the form of corrugated board. The board was found to have a micropore volume of 0.71 ml/g and an average micropore size of 2362 Å.

The corrugated board carrier was immersed in the same slurry as in - Example 2, an excess of the slurry was removed from the carrier by air blowing, and air-dried. This operation was repeated once more, and then the board was dried at 100°C over 18 hours, to provide a catalyst structure in the form of corrugated board. The catalyst structure was found to have a catalyst content of 0.34 g/ml.

The catalyst structures thus prepared in the Examples 2-4 were each cut to a volume of 30 mm x 30 mm x 20 mm (thickness) and a pair of electrodes of SUS 304 were attached to the opposite sides. The catalyst structures were found to have resistances of 93 $\Omega$ , 91 $\Omega$ and 258 $\Omega$, respectively. The catalyst structures, with electrodes attached, were each placed in insulative casings for use as reactors.

The activity of the reactors was measured in the same manner as hereinbefore set forth. However, in this measurement, a CS value of $10^8$ ppm/h was employed ( instead of the CA value), which is defined as the ozone concentration at the inlet of the reactor multiplied by the space velocity , since gas contact area per volume of the catalyst is undeterminable. The results are shown in Table 2.

TABLE 2

| | Temperature (°C) Gas at Outlet of Reactor | Ozone Concentration at Inlet of Reactor (ppm) | CS[1) | Ozone Decomposition Rate (%) | | |
|---|---|---|---|---|---|---|
| Catalyst Structure | | | | Initial | After 100 h | After 1000 h |
| Example 2 | | | | | | |
| 20 | 20 | 1000 | $10^8$ | 96.9 | 28.3 | 3.0 |
| 30 | 21 | 1000 | $10^8$ | 99.9 | 64.8 | 35.3 |
| 40 | 23 | 1000 | $10^8$ | 99.9 | 82.3 | 49.1 |
| 50 | 25 | 1000 | $10^8$ | 99.9 | 99.9 | 99.9 |
| Example 3 | | | | | | |
| 30 | 22 | 1000 | $10^8$ | 89.7 | 15.8 | 1.2 |
| 40 | 24 | 1000 | $10^8$ | 92.1 | 56.5 | 24.7 |
| 50 | 27 | 1000 | $10^8$ | 93.4 | 75.6 | 43.2 |
| 60 | 36 | 1000 | $10^8$ | 95.0 | 95.2 | 94.8 |
| Example 4 | | | | | | |
| 20 | 20 | 1000 | $10^8$ | 86.4 | 13.6 | 2.2 |
| 30 | 21 | 1000 | $10^8$ | 90.8 | 59.2 | 26.5 |
| 40 | 24 | 1000 | $10^8$ | 92.7 | 69.9 | 41.4 |
| 50 | 26 | 1000 | $10^8$ | 94.1 | 94.0 | 94.0 |

Note: 1) Ozone concentration at inlet of reactor x space velocity (ppm/h$\gamma$)

## Example 5

There was prepared air which contained 1000 ppm of ozone and the air was passed through the same reactor as in Example 1 at a CA value of 10000 at 20°C . The ozone decomposition rate was measured every ten hours. The results are shown under the column for the catalyst "as prepared". The longer the period over which the ozone decomposition was carried out, the more the catalyst was deactivated.

As a separate experiment, the same reactor as in Example 1 was electrified and heated to 50°C every ten hours to regenerate the catalyst. The results are shown in Table 3. The catalyst was regenerated to have an activity of more than 99 % every ten hours.

TABLE 3

| Reaction Time (h) | Ozone Decomposition Rate (%) | | |
|---|---|---|---|
| | As Prepared | Before Heating | After Heating |
| 0 | 79.0 | | |
| 10 | 75.6 | 75.1 | 94.9 |
| 20 | 67.4 | 76.1 | 94.9 |
| 30 | 61.3 | 76.8 | 94.7 |
| 40 | 56.0 | 74.8 | 94.6 |
| 50 | 50.3 | 74.3 | 94.7 |
| 60 | 45.1 | 76.5 | 95.0 |
| 70 | 40.5 | 76.1 | 95.1 |
| 80 | 35.6 | 76.5 | 95.1 |
| 90 | 31.6 | 75.8 | 94.9 |
| 100 | 28.1 | 75.6 | 94.9 |

**Claims**

1. An ozone decomposition reactor element which comprises
   (a) an ozone decomposition catalyst structure comprising a substrate which is selected from [i] a ceramic honeycomb mold (10) having at least one passage (11) extending therethrough for allowing fluid to pass therethrough and [ii] fibrous boards (21,31,32) arranged to provide at least one passage (23) therebetween for allowing fluid to pass therealong, the substrate carrying or incorporating ozone decomposition catalyst in an amount effective to render the substrate active for ozone decomposition and electroconductive material in the form of powder, fiber or whisker so that the catalyst structure can be heated by electrification; and
   (b) electrodes (12) attached to the catalyst structure for electrifying the structure to decompose ozone at elevated temperature.

2. An element according to claim 1 wherein the substrate comprises corrugated fibrous board (32).

3. An element according to claim 1 wherein the substrate is a ceramic honeycomb mold (10) which carries or incorporates the ozone decomposition catalyst in an amount of 30-70 % by weight and the electroconductive material in an amount of 30-70 % by weight, both based on the catalyst structure.

4. An element according to claim 1 or 2 wherein the substrate is fibrous board (21,31,32) which carries or incorporates the ozone decomposition catalyst in an amount of 5-30 % by weight and the electroconductive material in an amount of 30-50 % by weight, both based on the catalyst structure.

5. An element according to any preceding claim wherein the substrate has catalyst dispersed evenly throughout or supported thereon in a thin layer and electroconductive material dispersed evenly throughout or supported thereon in a thin layer.

6. A method of decomposing ozone contained in a fluid which comprises passing the fluid through the passage(s) of the ozone decomposition reactor element according to any of claims 1 to 5 while electrifying the catalyst structure to heat it to decompose ozone at elevated temperature.

7. A method according to claim 6 wherein the ozone decomposition is carried out at a temperature of 20-90°C.

EP 0 398 765 B1

**8.** A method of regenerating a used ozone decomposition catalyst reactor element according to any of claims 1 to 5, which method comprises electrifying the used catalyst structure to heat it to elevated temperature to regenerate the catalyst.

**9.** A method according to claim 8 wherein the regeneration is carried out at a temperature of 40-70 °C.

**Patentansprüche**

**1.** Ozonspaltungs-Reaktorelement, welches aufweist

(a) eine Ozonspaltungs-Katalysatorstruktur mit einem Substrat, das ausgewählt ist aus [i] einer keramischen Bienenwabenform (10) mit zumindest einem sich dadurch erstreckenden Durchgang (11), um Fluid hindurchfließen zu lassen, und [ii] faserigen Platten (21,31,32), die zum Bereitstellen zumindest eines sich dazwischen erstreckenden Durchgangs (23) angeordnet sind, um Fluid ein daran Entlangströmen zu erlauben, wobei das Substrat einen Ozonspaltungskatalysator in einer Menge, die das Substrat zur Ozonspaltung aktiv macht, und stromleitendes Material in Form von Pulver, Fasern oder Whiskern trägt oder enthält, so daß die Katalysatorstruktur durch unter Strom setzen geheizt werden kann, und

(b) Elektroden (12), die an der Katalysatorstruktur angebracht sind, um die Struktur zum Spalten von Ozon bei erhöhter Temperatur unter Strom zu setzen.

**2.** Element nach Anspruch 1,
bei dem das Substrat gewellte faserige Platten (32) aufweist.

**3.** Element nach Anspruch 1,
bei dem das Substrat eine keramische Bienenwabenform (10) ist, die den Ozonspaltungskatalysator in einer Menge von 30 bis 70 Gew.-% und das stromleitende Material in einer Menge von 30 bis 70 Gew.-%, jeweils bezogen auf die Katalysatorstruktur, trägt oder enthält.

**4.** Element nach Anspruch 1 oder 2,
bei dem das Substrat eine faserige Platte (21, 31, 32) ist, die den Ozonspaltungskatalysator in einer Menge von 5 bis 30 Gew.-% und das stromleitende Material in einer Menge von 30 bis 50 Gew.-%, jeweils bezogen auf die Katalysatorstruktur, trägt oder enthält.

**5.** Element nach einem der vorhergehenden Ansprüche,
bei dem das Substrat den Katalysator gleichmäßig in sich verteilt hat oder in einer dünnen Schicht auf dem Substrat trägt und das stromleitende Material gleichmäßig in sich verteilt hat oder in einer dünnen Schicht auf dem Substrat trägt.

**6.** Verfahren zum Spalten von in einem Fluid enthaltenen Ozon, umfassend das Führen des Fluids durch den bzw. die Durchgänge des Ozonspaltungs-Reaktorelements entsprechend einem der Ansprüche 1 bis 5 unter gleichzeitigem unter Strom setzen der Katalysatorstruktur, um sie zum Spalten von Ozon bei erhöhter Temperatur zu heizen.

**7.** Verfahren nach Anspruch 6,
bei dem die Ozonspaltung bei einer Temperatur von 20 bis 90 °C durchgeführt wird.

**8.** Verfahren zum Regenerieren eines gebrauchten Ozonspaltungs-Katalysatorreaktorelements gemäß einem der Ansprüche 1 bis 5, wobei das Verfahren ein unter Strom setzen der gebrauchten Katalysatorstruktur umfaßt, um sie zum Regenerieren des Katalysators auf eine erhöhte Temperatur zu heizen.

**9.** Verfahren nach Anspruch 8,
bei dem die Regeneration bei einer Temperatur von 40 bis 70 °C durchgeführt wird.

**Revendications**

**1.** Un élément de réacteur de décomposition d'ozone, qui comprend

(a) une structure catalytique de décomposition d'ozone comprenant un substrat qui est choisi parmi [i] une pièce moulée céramique en nid d'abeilles (10) à travers laquelle s'étend au moins un

10

passage (11) pour permettre à un fluide de la traverser et [ii] des panneaux fibreux (21, 31, 32) disposés de manière à offrir au moins un passage (23) entre eux pour permettre à un fluide de passer en les longeant, le substrat portant ou contenant un catalyseur de décomposition d'ozone en une quantité efficace pour rendre le substrat actif pour la décomposition d'ozone et une matière électroconductrice sous la forme de poudre, fibres ou barbes pour que la structure catalytique puisse être chauffée par passage de courant électrique ; et
(b) des électrodes (12) attachées à la structure catalytique pour faire passer un courant électrique dans la structure afin de décomposer l'ozone à température élevée.

2. Un élément selon la revendication 1, dans lequel le substrat comprend un panneau fibreux ondulé (32).

3. Un élément selon la revendication 1, dans lequel le substrat est une pièce moulée céramique en nid d'abeilles (10) qui porte ou contient le catalyseur de décomposition d'ozone en une quantité de 30 à 70 % en poids et la matière électroconductrice en une quantité de 30 à 70 % en poids, ces deux quantités étant exprimées sur la base de la structure catalytique.

4. Un élément selon la revendication 1 ou 2, dans lequel le substrat est un panneau fibreux (21, 31, 32) qui porte ou contient le catalyseur de décomposition d'ozone en une quantité de 5 à 30 % en poids et la matière électroconductrice en une quantité de 30 à 50 % en poids, ces deux quantités étant exprimées sur la base de la structure catalytique.

5. Un élément selon l'une quelconque des revendications précédentes, dans lequel le catalyseur est dispersé uniformément à travers tout le substrat ou supporté en couche mince sur celui-ci et la matière électroconductrice est dispersée uniformément à travers tout le substrat ou supportée en couche mince sur celui-ci.

6. Un procédé pour décomposer l'ozone contenue dans un fluide, qui consiste à faire passer le fluide par le ou les passages de l'élément de réacteur de décomposition d'ozone selon l'une quelconque des revendications 1 à 5 tout en faisant passer un courant électrique dans la structure catalytique pour la chauffer afin de décomposer l'ozone à température élevée.

7. Un procédé selon la revendication 6, dans laquelle la décomposition d'ozone est effectuée à une température de 20 à 90°C.

8. Un procédé pour régénérer un élément de réacteur à catalyseur de décomposition d'ozone selon l'une quelconque des revendications 1 à 5 à l'état usé, lequel procédé consiste à faire passer un courant électrique dans la structure catalytique usée pour la chauffer à température élevée afin de régénérer le catalyseur.

9. Un procédé selon la revendication 8, dans lequel la régénération est effectuée à une température de 40 à 70°C.

Fig. 1

Fig. 2

Fig. 3

Fig. 4

Fig. 5